# EUROPÄISCHE PATENTANMELDUNG

(11) **EP 3 336 622 A1**
(43) Veröffentlichungstag der Anmeldung: **20.06.2018**
(21) Anmeldenummer: 16204103.2
(22) Anmeldetag: 14.12.2016
(51) Int. Cl.: G05B 9/03, G05B 23/02

(54) **VERFAHREN ZUR ERMITTLUNG EINES PROZESSWERTES UND AUTOMATISIERUNGSBAUGRUPPE**

(71) Anmelder: Siemens Aktiengesellschaft, 80333 München (DE)
(72) Erfinder: Barthel, Herbert, 91074 Herzogenaurach (DE); Maul, Jürgen, 92237 Sulzbach-Rosenberg (DE)

(57) **Zusammenfassung**

Die Erfindung betrifft ein Verfahren zur Ermittlung eines Prozesswertes (AI) für eine Automatisierungsanlage, wobei in einem
- ersten Schritt zur Erhöhung der Verfügbarkeit der Automatisierungsanlage der Prozesswert (AI) über einen ersten Kanal (a) als ein erstes Mess-Ergebnis (M1ₙ₍ₜ₎) zu einem Haupt-Abtastzeitpunkt (tₙ) und über einen zweiten Kanal (b) als ein zweites Mess-Ergebnis (M2_{n(t+Δt)}) zu einem Neben-Abtastzeitpunkt (tₙ+Δt) ermittelt wird, und in einem
- zweiten Schritt für die zwei Mess-Ergebnisse (M1n(t),

M2n(t+Δt)) ein Diskrepanz-Wert (DV) ermittelt wird, wobei zusätzlich für den ersten Kanal (a) aus dem ersten Mess-Ergebnis (M1ₙ₍ₜ₎) zum Haupt-Abtastzeitpunkt (tₙ) und aus dem ersten Mess-Ergebnis (M1ₙ₋₁₍ₜ₎) von einem Vorgänger Haupt-Abtastzeitpunkt (tₙ₋₁) ein Änderungswert (SLV) berechnet wird, wobei für eine Diskrepanzüberwachung ein Korrektur-Diskrepanz-Wert (CDV) aus der Summe eines parametrierbaren zulässigen Diskrepanz-Wertes (PDV) und des Änderungswertes (SLV) berechnet wird und ein Diskrepanzmerker (DM) gesetzt wird, wenn der Diskrepanz-Wert (DV) größer ist als der Korrektur-Diskrepanz-Wert (CDV).

## Beschreibung

Die Erfindung betrifft ein Verfahren zur Ermittlung eines Prozesswertes für eine Automatisierungsanlage, wobei in einem ersten Schritt zur Erhöhung der Verfügbarkeit der Automatisierungsanlage der Prozesswert über einen ersten Kanal als ein erstes Mess-Ergebnis zu einem Haupt-Abtastzeitpunkt und über einen zweiten Kanal als ein zweites Mess-Ergebnis zu einen Neben-Abtastzeitpunkt ermittelt wird, und in einem zweiten Schritt für die zwei Mess-Ergebnisse ein Diskrepanz-Wert ermittelt wird.

Des Weiteren betrifft die Erfindung eine Automatisierungsbaugruppe für eine Automatisierungsanlage ausgestaltet zur Ermittlung eines Prozesswertes, wobei zur Erhöhung der Verfügbarkeit der Automatisierungsanlage ein erster Eingang und ein zweiter Eingang vorhanden sind und der erste Eingang ausgestaltet ist, über einen anschließbaren ersten Kanal ein erstes Mess-Ergebnis zu einem Hauptabtastzeitpunkt entgegen zu nehmen und der zweite Eingang ausgestaltet ist, über einen anschließbaren zweiten Kanal ein zweites Mess-Ergebnis zu einen Neben-Abtastzeitpunkt entgegenzunehmen, weiterhin ausgestaltet mit einem Funktionsblock, welcher ausgestaltet ist, für die zwei Mess-Ergebnisse einen Diskrepanz-Wert zu ermitteln.

Nach dem Stand der Technik ist es bekannt, dass zur Erhöhung einer Automatisierungsverfügbarkeit Prozesswerte von zwei Kanälen gemessen werden, damit wenn einer der Kanäle ausfällt, noch ein intakter Kanal für die Messaufgabe vorhanden ist. Eine Diskrepanz-Überwachung soll erkennen, wenn einer der beiden Kanäle fehlerhaft ist, z.B. RAM-Fehler, Mess-Fehler, Prozessor-Fehler, Fehler in der Kommunikation usw.. Sind die beiden Kanäle als Analog-Input-Kanäle ausgelegt, tasten sie ein Sensorsignal zu unterschiedlichen Zeitpunkten ab. Wenn der Wert, der im Prozess gemessen werden soll (Druck, Temperatur, Durchfluss, ...) sich relativ schnell ändert, dann werden an den beiden Analog-Input-Kanälen unterschiedliche Werte gemessen. D.h. solange sich der Prozesswert ändert ändern sich auch die zu unterschiedlichen Zeitpunkten gemessenen Messwerte, obwohl kein Diskrepanzfehler vorliegt. Dies kann zum Ansprechen der Diskrepanz-Überwachung führen, ohne dass ein Fehler vorliegt.

In der Offenlegungsschrift EP 2 720 094 A1 wird ein Sicherheitssystem mit einer Diskrepanzüberwachung vorgestellt. Das beschriebene Sicherheitssystem beschäftigt sich mit der Erkennung eines Diskrepanzfehlers, insbesondere bei zwei redundant verschalteten NOT-AUS-Tastern.

Der Erfindung liegt die Aufgabe zugrunde, ein Verfahren bereitzustellen, welches eine vorzeitige Diskrepanzfehlermeldung unterdrückt, wenn in Wirklichkeit kein Fehler vorliegt.

Für das eingangs genannte Verfahren wird die Aufgabe dadurch gelöst, dass zusätzlich für den ersten Kanal aus dem ersten Mess-Ergebnis zum Haupt-Abtastzeitpunkt und aus dem ersten Mess-Ergebnis von einem Vorgänger Hauptabtastzeitpunkt ein Änderungswert berechnet wird, wobei für eine Diskrepanzüberwachung ein Korrektur-Diskrepanz-Wert aus der Summe eines parametrierbaren zulässigen Diskrepanz-Wertes und des Änderungswertes berechnet wird und ein Diskrepanzmerker gesetzt wird, wenn der Diskrepanz-Wert größer ist als der Korrektur-Diskrepanz-Wert. Mit dem erfindungsgemäßen Diskrepanzüberwachungsverfahren wird nicht nur eine Diskrepanz zwischen den Messwerten der beiden Kanäle geprüft, sondern es wird auch die Signaländerung zwischen der letzten und der aktuellen Messung berücksichtigt. Die Signaländerung, nämlich der Änderungswert, zwischen der letzten und der aktuellen Messung wird mit in die Berechnung der zulässigen Diskrepanz einbezogen.

In einer weiteren Ausgestaltung wird zusätzlich für den zweiten Kanal aus dem zweiten Mess-Ergebnis zum Neben-Abtastzeitpunkt und aus dem zweiten Mess-Ergebnis von einem Vorgänger-Nebenabtastzeitpunkt der Änderungswert erneut berechnet, wobei für die Diskrepanzüberwachung der Korrektur-Diskrepanz-Wert aus der Summe des parametrierbaren zulässigen Diskrepanz-Wertes und des erneut berechneten Änderungswertes berechnet wird, und der Diskrepanzmerker gesetzt wird, wenn der Diskrepanz-Wert größer ist als der Korrektur-Diskrepanz-Wert.

Erfindungsgemäß wird eine Lösung für beispielsweise eine "Analog-Diskrepanz-Überwachung deren Eingangssignale sich über mehrere Abtastungen hinweg ändern" aufgezeigt. Vorteilhafterweise wird bei diesem Verfahren auch bei sich "ändernden Analogwerten" nur dann ein Diskrepanzfehler angezeigt, wenn auch tatsächlich ein Fehler vorliegt.

In einer weiterführenden Ausgestaltung des Verfahrens wird für den Fall, dass der Prozesswert von einem Sensor ermittelt wird, anhand des gesetzten Diskrepanzmerkers eine Diskrepanzfehlermeldung ausgegeben, und für den Fall, dass der Prozesswert von zwei Sensoren ermittelt wird, anhand des gesetzten Diskrepanzmerkers zunächst ein Timer gestartet, und in einem nächsten Durchlauf bei nicht gesetzten Diskrepanzmerker wird der Timer gestoppt.

Der Timer wird mit einer Diskrepanzzeit vorbelegt, die Diskrepanzzeit ist die maximale Zeit, für die die beiden Eingänge einer zweikanaligen Auswertung unzulässige Zustände oder Differenzen aufweisen dürfen, ohne das eine Hochverfügbarkeit-Logik diesen Zustand als Fehler meldet.

Demnach toleriert eine derartige Diskrepanzüberwachung durch ein definiertes Zeitfenster die Ungleichzeitigkeit von zusammengehörigen Signalen. Es wird auch der Begriff "Gleichzeitigkeitsüberwachung" verwendet. Die Überwachung von Signalgebern wird zur Erhöhung der funktionalen Sicherheit angewendet. Sie erfolgt, in dem der Signalwechsel der Signalgeber innerhalb der vorgegebenen Zeit überprüft wird. Wird diese Zeit überschritten und lag bei einem Betrieb mit zwei Sensoren eine Diskrepanzüberwachung vor, so wird eine Fehlermeldung generiert.

Ein einzustellender Timer, bzw. die einzustellende Diskrepanzzeit wird nun unabhängig vom Prozess und ist im Fall für den Betrieb mit einem Sensor vorzugsweise gleich Null und im Fall für den Betrieb mit zwei Sensoren nur noch abhängig von den technischen Daten des Sensors bzw. der Sensoren. Weiterhin wird als vorteilhaft für das Verfahren angesehen, dass es sich automatisch an gegebene Abtastraten (CPU, Analogmodul, Sensor) und Feldbuszyklen anpasst.

Die eingangs genannte Aufgabe wird ebenso durch eine Automatisierungsbaugruppe für eine Automatisierungsanlage gelöst, wobei die Automatisierungsbaugruppe zur Ermittlung eines Prozesswertes ausgestaltet ist, wobei zur Erhöhung der Verfügbarkeit der Automatisierungsanlage ein erster Eingang und ein zweiter Eingang vorhanden sind, und der erste Eingang ausgestaltet ist, über einen anschließbaren ersten Kanal ein erstes Mess-Ergebnis zu einem Haupt-Abtastzeitpunkt entgegenzunehmen und der zweite Eingang ausgestaltet ist, über einen anschließbaren zweiten Kanal ein zweites Mess-Ergebnis zu einem Neben-Abtastzeitpunkt entgegenzunehmen, weiterhin ausgestaltet mit einem Funktionsblock, welcher ausgestaltet ist für die zwei Mess-Ergebnisse ein Diskrepanz-Wert zu ermitteln, wobei der Funktionsblock weiterhin dazu ausgestaltet ist, für den ersten Kanal aus dem ersten Mess-Ergebnis zum Haupt-Abtastzeitpunkt und aus dem ersten Mess-Ergebnis von einem Vorgängerhaupt-Abtastzeitpunkt ein Änderungswert zu berechnen und für eine Diskrepanzüberwachung ein Korrektur-Diskrepanz-Wert aus der Summe eines parametrierbaren zulässigen Diskrepanz-Wertes und des Änderungswertes zu berechnen und ein Diskrepanzmerker zu setzen, wenn der Diskrepanz-Wert größer ist als der Korrektur-Diskrepanz-Wert.

Bei einer derartigen Automatisierungsbaugruppe werden zur Erhöhung der Automatisierungsverfügbarkeit Prozesswerte von zwei Kanälen gemessen, damit wenn einer der Kanäle ausfällt, noch ein intakter Kanal für die Messaufgabe vorhanden ist. Dabei soll eine Diskrepanz-Überwachung erkennen, wenn einer der beiden Kanäle fehlerhaft ist (z.B. RAM-Fehler, Messfehler, Prozessorfehler, eingefrorener Wert, Fehler in der Kommunikation ...).

Damit die Diskrepanzüberwachung auf jeden der beiden Kanäle die Werteänderung ermitteln kann, wird in einer weiterführenden Ausgestaltung der Automatisierungskomponente der Funktionsblock weiterhin dazu ausgestaltet, zusätzlich für den zweiten Kanal aus dem zweiten Mess-Ergebnis zum Neben-Abtastzeitpunkt und aus dem zweiten Mess-Ergebnis von einem Vorgänger Neben-Abtastzeitpunkt den Änderungswert erneut zu berechnen, und für die Diskrepanzüberwachung den Korrektur-Diskrepanz-Wert aus der Summe des parametrierbaren zulässigen Diskrepanz-Wertes und des erneut berechneten Änderungswertes zu berechnen und den Diskrepanzmerker zu setzen, wenn der Diskrepanz-Wert größer ist als der Korrektur-Diskrepanz-Wert.

Weiterhin ist es vorteilhaft, wenn die Automatisierungsbaugruppe ein Erkennungsmittel aufweist, welches ausgestaltet ist zu erkennen, ob an dem ersten Eingang über den ersten Kanal und an dem zweiten Eingang über den zweiten Kanal jeweils ein und derselbe Sensor angeschlossen ist, oder ob an den ersten Kanal ein erster Sensor angeschlossen ist und an dem zweiten Kanal ein zweiter Sensor angeschlossen ist, wobei der Funktionsblock weiterhin dazu ausgestaltet ist, für den Fall dass der Prozesswert von einem einzigen Sensor ermittelt wird, anhand des gesetzten Diskrepanzmerkers eine Diskrepanzfehlermeldung auszugeben, und für den Fall, dass der Prozesswert von zwei Sensoren ermittelt wird, anhand des gesetzten Diskrepanzmerkers zunächst einen Timer zu starten und in einem nächsten Durchlauf bei nicht gesetztem Diskrepanzmerker den Timer wieder zu stoppen bzw. bei Ablauf des Timers eine Fehlermeldung auszugeben.

Nachfolgend wird die Erfindung beispielhaft an einer vorteilhaften Ausführungsform unter Bezugnahme auf die beigefügten Figuren beschrieben. Es zeigen
- FIG 1: einen ersten Fall mit einem angeschlossenen Sensor und einen zweiten Fall mit zwei angeschlossenen Sensoren,
- FIG 2: die bildliche Darstellung eines Signalverlaufes für einen Prozesswert,
- FIG 3: einen Programmablaufplan des Verfahrens und
- FIG 4: ein Zustandsgraf für das Starten eines Timers bzw. für das Starten der Diskrepanzzeit.

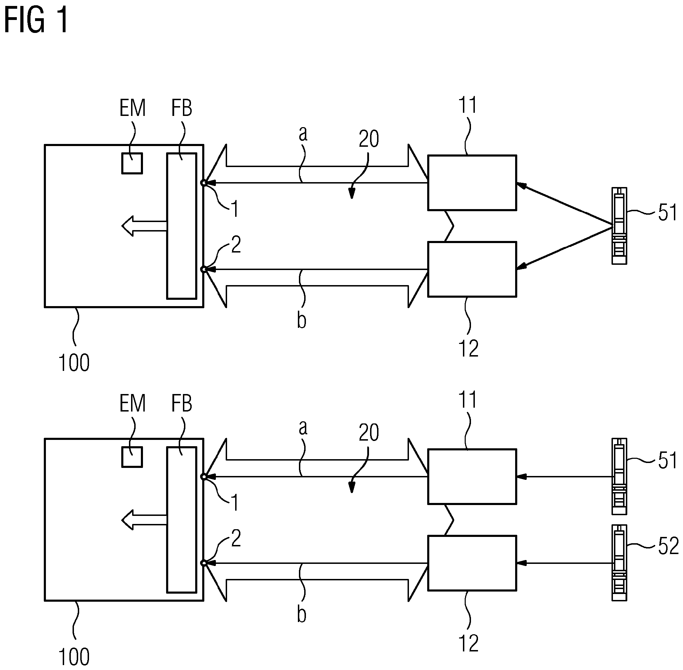

Gemäß FIG 1 sind die zwei Fälle für den Anschluss von Sensoren dargestellt. Im oberen Bild der FIG 1 ist ein erster Sensor S1 an zwei Kanäle, nämlich an einen ersten Kanal a und einen zweiten Kanal b angeschlossen. In der unteren Abbildung der FIG 1 ist ein erster Sensor S1 an den ersten Kanal a angeschlossen und zweiter Sensor S2 ist an den zweiten Kanal b angeschlossen. Die Automatisierungsbaugruppe 100 weist einen Funktionsblock FB auf, in welchem das Verfahren zur Ermittlung des Prozesswertes AI bzw. der Diskrepanzüberwachung implementiert ist. Die Automatisierungsbaugruppe 100 steht über einen Feldbus 20 mit einer ersten Analogeingabebaugruppe 11 und einer zweiten Analogeingabebaugruppe 12 in Verbindung, wobei in dem Feldbus 20 der erste Kanal a die Verbindung der ersten Analogeingabebaugruppe 11 mit der Automatisierungsbaugruppe 100 herstellt und der zweite Kanal b die Verbindung der zweiten Analogeingabebaugruppe 12 mit der Automatisierungsbaugruppe 100 herstellt. Mit dieser Auslegung aus einem ersten Kanal a und einem zweiten Kanal b zu jeweils einer gesonderten Analogeingabebaugruppe 11,12 ist eine redundante Verbindung aufgebaut.

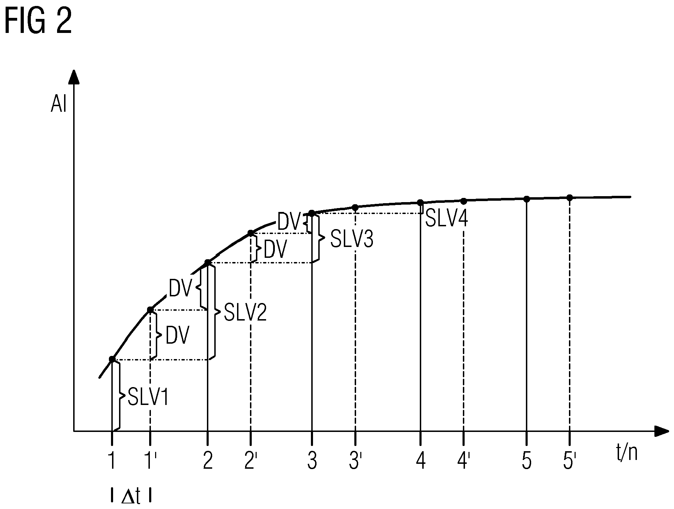

Zur Erhöhung der Verfügbarkeit der Automatisierungsanlage weist die Automatisierungsbaugruppe 100 einen ersten Eingang 1 und einen zweiten Eingang 2 auf, dabei ist der erste Eingang 1 ausgestaltet über den angeschlossenen ersten Kanal a ein erstes Messergebnis M1ₙ₍ₜ₎ zu einem Haupt-Abtastzeitpunkt tₙ entgegenzunehmen und der zweite Eingang 2 ist ausgestaltet über den angeschlossenen zweiten Kanal b ein zweites Messergebnis M2_{n(t+Δt)} zu einen Neben-Abtastzeitpunkt tₙ+Δt entgegenzunehmen. Weiterhin ist der Funktionsblock FB ausgestaltet für die zwei Mess-Ergebnisse M1ₙ₍ₜ₎, M2_{n(t+Δt)} einen Diskrepanz-Wert DV zu ermitteln. Um das Verfahren durchzuführen, ist der Funktionsblock FB weiterhin ausgestaltet, für den ersten Kanal a aus dem ersten Mess-Ergebnis M1ₙ₍ₜ₎ zum Haupt-Abtastzeitpunkt tₙ und aus dem ersten Mess-Ergebnis M1ₙ₋₁₍ₜ₎ von einem Vorgänger Haupt-Abtastzeitpunkt tₙ₋₁ ein Änderungswert SLV zu berechnen (siehe auch FIG 2) und für die Diskrepanzüberwachung einen Korrektur-Diskrepanz-Wert CDV aus der Summe eines parametrierbaren zulässigen Diskrepanz-Wertes PDV und des Änderungswertes SLV zu berechnen und ein Diskrepanzmerker DM zu setzen, wenn der Diskrepanz-Wert PDV größer ist als der Korrektur-Diskrepanz-Wert CDV.

Um auch den zweiten Kanal b zu erfassen, weist der Funktionsblock FB zusätzlich das Berechnungsverfahren für den zweiten Kanal b auf, wobei aus dem zweiten Mess-Ergebnis M2_{n(t+Δt)} zum Neben-Abtastzeitpunkt tₙ+Δt und aus dem zweiten Mess-Ergebnis M2_{n-1(t+Δt)} von einem Vorgänger-Nebenabtastzeitpunkt tₙ₋₁+Δt den Änderungswert SLV erneut zu berechnen, und für die Diskrepanzüberwachung den Korrektur-Diskrepanz-Wert CDV aus der Summe des parametrierbaren zulässigen Diskrepanz-Wertes DV und des erneut berechneten Änderungswertes SLV zu berechnen und den Diskrepanzmerker DM zu setzen, wenn der Diskrepanz-Wert DV größer ist als der Korrektur-Diskrepanz-Wert CDV.

Mit der FIG 2 wird noch einmal das zuvor geschilderte Verfahren verdeutlicht. Die beschriebene Diskrepanzüberwachung ermittelt auf jeden der beiden Kanäle a,b die Werteänderung die sich zwischen zwei Messungen des jeweiligen Kanals ergibt. Auf der x-Achse ist die Zeit t bzw. ein Zeitpunkt für die erste Messung (1,2,3,...,n) und ein Zeitpunkt für die zweite Messung (1',2',3',...,n) aufgetragen. Der Abstand zwischen dem Zeitpunkt 1' für die erste Messung 1 und dem Zeitpunkt für die zweite Messung 2' entspricht dem Δt. Der Änderungswert SLV, ist mit der FIG 2 zu verschiedenen Zeitpunkten als ein erster Änderungswert SLV1, ein zweiter Änderungswert SLV2, ein dritter Änderungswert SLV3 und ein vierter Änderungswert SLV4 dargestellt.

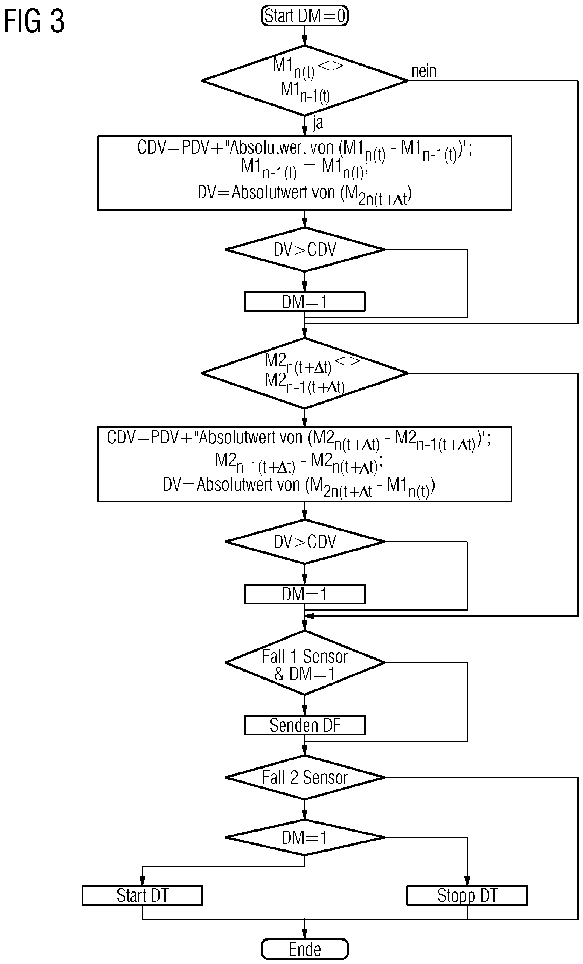

Die FIG 3 zeigt einen Programmablaufplan des Verfahrens zur Ermittlung des Prozesswertes für eine Automatisierungsanlage.

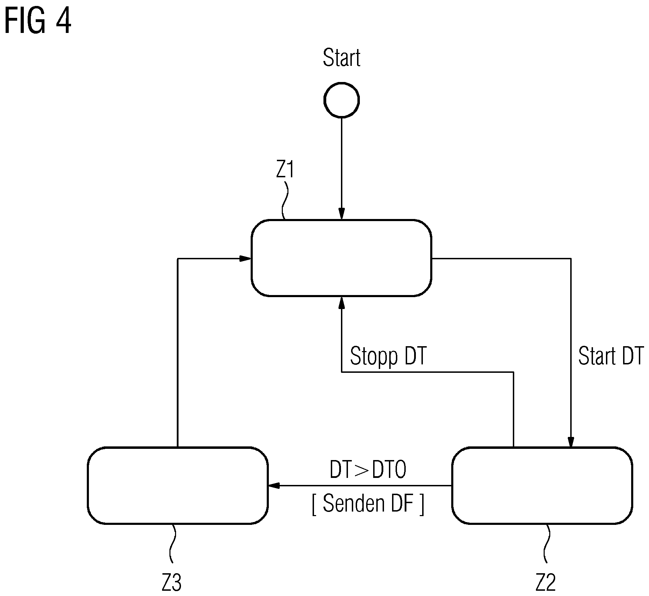

Mit der FIG 4 ist ein Zustandsgraf mit einem ersten Zustand Z1, einem zweiten Zustand Z2 und einem dritten Zustand Z3 dargestellt. Der erste Zustand Z1 sagt aus, dass der Diskrepanzmerker DM nicht gesetzt ist, sollte der Diskrepanzmerker DM gesetzt sein, so geht der Graf in den zweiten Zustand Z2 über und der Timer TD für die Diskrepanzzeit wird gestartet. Sollte der Diskrepanzmerker DM wieder zurückgenommen werden, so wird der Timer TD für die Diskrepanzzeit gestoppt. Sollte ausgehend von dem zweiten Zustand Z2 ein dritter Zustand Z3 erreicht werden, welches bedeutet, dass der Timer TD größer ist als eine vorgegebene Diskrepanzzeitüberschreitung TDO, so wird eine Diskrepanzfehlermeldung DF abgesetzt und wieder in den ersten Zustand Z1 übergegangen.

## Patentansprüche

1. Verfahren zur Ermittlung eines Prozesswertes (AI) für eine Automatisierungsanlage, wobei in einem
- ersten Schritt zur Erhöhung der Verfügbarkeit der Automatisierungsanlage der Prozesswert (AI) über einen ersten Kanal (a) als ein erstes Mess-Ergebnis (M1ₙ₍ₜ₎) zu einem Haupt-Abtastzeitpunkt (tₙ) und über einen zweiten Kanal (b) als ein zweites Mess-Ergebnis (M2_{n(t+Δt)}) zu einem Neben-Abtastzeitpunkt (tₙ+Δt) ermittelt wird, und in einem
- zweiten Schritt für die zwei Mess-Ergebnisse (M1ₙ₍ₜ₎), M2_{n(t+Δt)}) ein Diskrepanz-Wert (DV) ermittelt wird,
**dadurch gekennzeichnet, dass** zusätzlich für den ersten Kanal (a) aus dem ersten Mess-Ergebnis (M1ₙ₍ₜ₎) zum Haupt-Abtastzeitpunkt (tₙ) und aus dem ersten Mess-Ergebnis (M1ₙ₋₁₍ₜ₎) von einem Vorgänger Haupt-Abtastzeitpunkt (tₙ₋₁) ein Änderungswert (SLV) berechnet wird, wobei für eine Diskrepanzüberwachung ein Korrektur-Diskrepanz-Wert (CDV) aus der Summe eines parametrierbaren zulässigen Diskrepanz-Wertes (PDV) und des Änderungswertes (SLV) berechnet wird und ein Diskrepanzmerker (DM) gesetzt wird, wenn der Diskrepanz-Wert (DV) größer ist als der Korrektur-Diskrepanz-Wert (CDV).

2. Verfahren nach Anspruch 1, wobei zusätzlich für den zweiten Kanal (b) aus dem zweiten Mess-Ergebnis (M2_{n(t+Δt)}) zum Neben-Abtastzeitpunkt (tₙ+Δt) und aus dem zweiten Mess-Ergebnis (M2_{n-1(t+Δt)}) von einem Vorgänger Neben-Abtastzeitpunkt (tₙ₋₁+Δt) der Änderungswert (SLV) erneut berechnet wird, wobei für die Diskrepanzüberwachung der Korrektur-Diskrepanz-Wert (CDV) aus der Summe des parametrierbaren zulässigen Diskrepanz-Wertes (PDV) und des erneut berechneten Änderungswertes (SLV) berechnet wird und der Diskrepanzmerker (DM) gesetzt wird, wenn der Diskrepanz-Wert (DV) größer ist als der Korrektur-Diskrepanz-Wert (CDV).

3. Verfahren nach einem der Ansprüche 1 oder 2, wobei für den Fall, dass der Prozesswert (AI) von einem Sensor (S1) ermittelt wird, anhand des gesetzten Diskrepanzmerkers (DM) eine Diskrepanzfehlermeldung (DF) ausgegeben wird, und für den Fall, dass der Prozesswert (AI) von zwei Sensoren (S1, S2) ermittelt wird, anhand des gesetzten Diskrepanzmerkers (DM) zunächst ein Timer (DT) gestartet wird und in einem nächsten Durchlauf bei nicht gesetztem Diskrepanzmerker (DM) der Timer (DI) gestoppt wird.

4. Automatisierungsbaugruppe (100) für eine Automatisierungsanlage ausgestaltet zur Ermittlung eines Prozesswertes (AI), wobei zur Erhöhung der Verfügbarkeit der Automatisierungsanlage ein erster Eingang (1) und ein zweiter Eingang (2) vorhanden sind und der erste Eingang (1) ausgestaltet ist über einen anschließbaren ersten Kanal (a) ein erstes Mess-Ergebnis (M1ₙ₍ₜ₎) zu einem Haupt-Abtastzeitpunkt (tₙ) entgegen zu nehmen und der zweite Eingang (2) ausgestaltet ist über einen anschließbaren zweiten Kanal (b) ein zweites Mess-Ergebnis (M2_{n(t+Δt)}) zu einem Neben-Abtastzeitpunkt (tₙ+Δt) entgegen zu nehmen, weiterhin ausgestaltet mit einem Funktionsblock (FB), welcher ausgestaltet ist für die zwei Mess-Ergebnisse (M1ₙ₍ₜ₎, M2_{n(t+Δt)}) ein Diskrepanz-Wert (DV) zu ermitteln, **dadurch gekennzeichnet, dass** der Funktionsblock (FB) weiterhin dazu ausgestaltet ist, für den ersten Kanal (a) aus dem ersten Mess-Ergebnis (M1ₙ₍ₜ₎) zum Haupt-Abtastzeitpunkt (tₙ) und aus dem ersten Mess-Ergebnis (M1ₙ₋₁₍ₜ₎) von einem Vorgänger Haupt-Abtastzeitpunkt (tₙ₋₁) ein Änderungswert (SLV) zu berechnen und für eine Diskrepanzüberwachung ein Korrektur-Diskrepanz-Wert (CDV) aus der Summe eines parametrierbaren zulässigen Diskrepanz-Wertes (PDV) und des Änderungswertes (SLV) zu berechnen und ein Diskrepanzmerker (DM) zu setzen, wenn der Diskrepanz-Wert (DV) größer ist als der Korrektur-Diskrepanz-Wert (CDV).

5. Automatisierungsbaugruppe (100), wobei der Funktionsblock (FB) weiterhin dazu ausgestaltet ist, zusätzlich für den zweiten Kanal (b) aus dem zweiten Mess-Ergebnis (M2_{n(t+Δt)}) zum Neben-Abtastzeitpunkt (tₙ+Δt) und aus dem zweiten Mess-Ergebnis (M2_{n-1(t+Δt)}) von einem Vorgänger Neben-Abtastzeitpunkt (tₙ+Δt) den Änderungswert (SLV) erneut zu berechnen, und für die Diskrepanzüberwachung den Korrektur-Diskrepanz-Wert (CDV) aus der Summe des parametrierbaren zulässigen Diskrepanz-Wertes (PDV) und des erneut berechneten Änderungswertes (SLV) zu berechnen und den Diskrepanzmerker (DM) zu setzen, wenn der Diskrepanz-Wert (DV) größer ist als der Korrektur-Diskrepanz-Wert (CDV).

6. Automatisierungsbaugruppe (100), mit einem Erkennungsmittel (EM), welches ausgestaltet ist, zu erkennen, ob an den ersten Eingang (1) über den ersten Kanal (a) und an den zweiten Eingang (2) über den zweiten Kanal (b) jeweils ein und derselbe Sensor angeschlossen ist, oder ob an den ersten Kanal (a) ein erster Sensor (S1) angeschlossen ist und an den zweiten Kanal (b) ein zweiter Sensor (S2) angeschlossen ist, wobei der Funktionsblock (FB) weiterhin ausgestaltet ist, für den Fall, dass der Prozesswert (AI) von einem einzigen Sensor (S1) ermittelt wird, anhand des gesetzten Diskrepanzmerkers (DM) eine Diskrepanzfehlermeldung (DF) auszugeben, und für den Fall, dass der Prozesswert (AI) von zwei Sensoren (S1, S2) ermittelt wird, anhand des gesetzten Diskrepanzmerkers (DM) zunächst einen Timer (DT) zu starten und in einem nächsten Durchlauf bei nicht gesetztem Diskrepanzmerker (DM) den Timer wieder zu stoppen bzw. bei Ablauf des Timers (DT) eine Fehlermeldung auszugeben.
